# EUROPEAN PATENT APPLICATION

(11) **EP 2 631 844 A1**
(43) Date of publication of application: **28.08.2013**
(21) Application number: 11833659.3
(22) Date of filing: 21.10.2011
(51) Int. Cl.: G06K 9/46

(54) **SYSTEM AND METHOD FOR DIGITISING OBJECTS THAT CAN BE DESIGNED IN MULTIPLE STEPS WITH AUTOMATIC CALIBRATION**

(30) Priority: 22.10.2010 BR PI1004813
(71) Applicant: Audaces Automação E Informática Industrial LTDA., 88030-000 Florianópolis / SC (BR)
(72) Inventor: ALMEIDA RODRIGUES DE MORAES CAMARGO, Juliano, 88061-701 Florianópolis / SC (BR); BERTUOL, Guilherme, 88034-101 Florianopolis / SC (BR); QUINTAES MARCHINI, Márcio, 88051-310 Florianópolis / SC (BR); PESCUMA DOMENECCI, Ricardo, 88034-100 Florianópolis / SC (BR)
(74) Representative: Pereira Garcia, João Luís
(86) International application number: PCT/BR2011/000395
(87) International publication number: WO 2012/051690

(57) **Abstract**

A system and method are described for digitising objects that can be designed in multiple steps with automatic calibration, with a supporting base (10) on which the objects (30) to be designed are placed, and covered by a flat transparent surface (20) provided with a template (21) at the periphery thereof. The method includes the automatic calibration of perspectives, and the steps required to form an object (30) being designed from various independent digital images, providing a technical solution in the cases where the object (30) being designed has greater dimensions than the template, and solving the problems of digitisation accuracy when the object being designed is not placed with the entire surface thereof in contact with the base. Optionally, a QR marker (22) located in the flat transparent surface (20) contains information related to the real dimensions of the printed template and other additional information, such as a copy protection system and client identification, *inter alia.*

## Description

### Field of the Invention

The invention relates to a system and a method for digitizing objects that can be designed in multiple steps with automatic calibration. More particularly, the invention relates to a system comprising a supporting base on which the designable objects are placed and superimposed by a flat transparent surface fitted with a template arranged at its periphery. The method describes the automatic calibration of lens and perspective distortion and the steps necessary for forming designable objects from various independent digital images. Both the system and the method may be applied to the digitization of large-size patterns for the apparel industry.

### Background of the invention

Traditionally, patterns used in the garment manufacturing industry were digitized in a slow manner on a digitizing table where an operator identified various outline points the on the real (paper) pattern by means of a crosshead and the system converted said points into a polygon or a closed smooth curve by using such techniques as Beziers and Splines.

As digital cameras became more common and precise, digitization image-based systems were developed. However, said systems needed camera lens to be aligned with the plane of designable objects. Advances in computer vision and photogrammetry techniques have led to processes that allow said alignment to be effectively corrected, making the use of images for digitization of designable objects possible. In general, these processes use an initial step of calibration necessary for this alignment.

BRPI0802865 by the same author simplifies the calibration process, eliminating a manual set-up step, but restricts the maximum size of designable objects. Basically, it describes a process of generating digital files from an image capture device, which includes an automatic method for orthogonalizing the perspective and removing optical distortions arising on the digital image, making possible the detection of the original characteristics of form and dimensions of designable objects arranged on a template for further use in CAD software. In the document above, the arrangement of flat objects on the template doesn't allow the flat object to be larger than the dimensions of the template and there are problems in the digitization precision when the entire surface of the designable object is not in contact with the base. On the contrary, the objective of this invention is a transparent surface arranged on designable objects with the template printed on the contact face with said designable object in order to exert pressure to make the entire surface of the designable object be in contact with the base, thus improving the digitization precision. Additionally, the template on the designable object allows the dimensions of said designable object to be larger than those of the transparent surface containing the template.

BRPI0405039 by the same author describes a system for digitizing patterns that corrects dimensional errors on the image captured by a digital camera through a reference template arranged on the same plane of the pattern to be photographed. This document has the same inconveniences described in the previous document.

Therefore, the objective of this invention is a system and a method for digitizing objects that can be designed in multiple steps with automatic calibration, comprising a supporting base on which the designable objects are placed and superimposed by a flat transparent surface fitted with a template as shown in BRPI0405039 and BRPI0802865 above, which allows a designable object to be formed from various independently obtained digital images.

Optionally, in order to ensure better precision in the template detection process, the flat transparent surface has a QR marker that contains information relative to the real dimensions of the printed template which may undergo dimensional alterations in the manufacturing process, thus impairing the template detection method. Moreover, the QR marker may contain additional information such as, for example, anti-piracy mechanism and client identification, among others.

### SUMMARY

A system and a method for digitizing objects that can be designed in multiple steps with automatic calibration according to the invention characterized in that said system has a flat transparent surface fitted with a template that exerts pressure on the designable object in order to keep its entire surfaces in contact with the base.

A system and a method for digitizing objects that can be designed in multiple steps with automatic calibration according to the invention characterized in that said system allows a designable object to be formed from various independently obtained digital images by using photo stitching techniques that allow forming a larger final image with distortion correction, thus making possible digitization of large-sized flat objects that originally wouldn't fit inside the area of the template.

A system and a method for digitizing objects that can be designed in multiple steps with automatic calibration according to the invention characterized in that said method eliminates the need for a set-up or previous calibration step wherein each image digitized by this method contains parameters necessary for correcting the perspective and optical distortion.

A system and a method for digitizing objects that can be designed in multiple steps with automatic calibration according to the invention characterized in that they can be applied to the apparel industry.

### BRIEF DESCRIPTION OF THE FIGURES

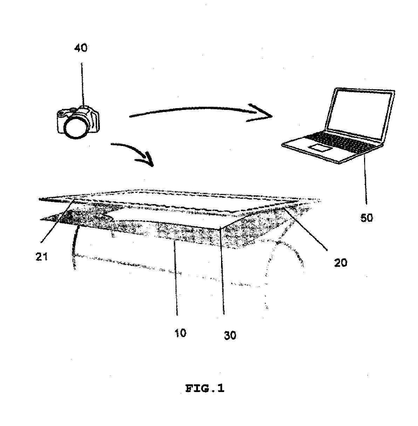

Figure 1 shows a schematic representation of the system for digitizing objects that can be designed in multiple steps with automatic calibration having a supporting base on which designable objects are arranged, a flat transparent surface with the template, a digital camera that captures a digital image of the entire surface with the designable object and the template, and a computer that receives images for further processing.

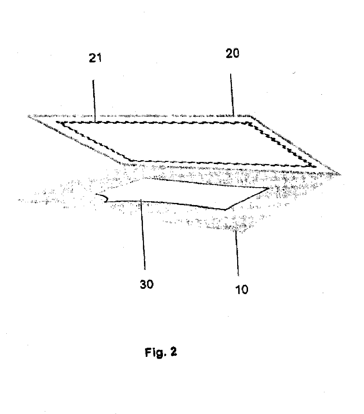

Figure 2 shows the details of the supporting base with the flat transparent surface.

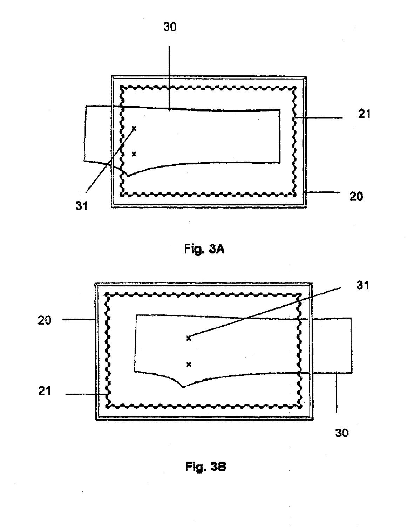

Figures 3A and 3B show a transparent surface with the template arranged on a designable object with visual indicators for digital stitching.

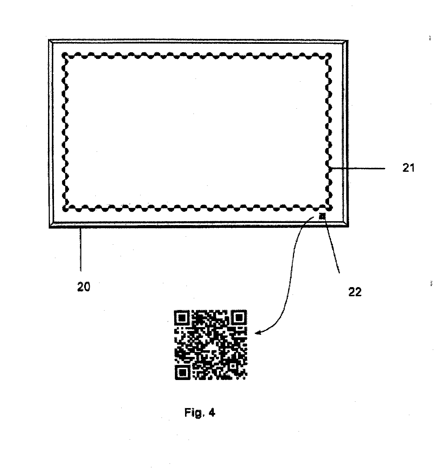

Figure 4 shows a flat transparent surface with the template and the QR marker.

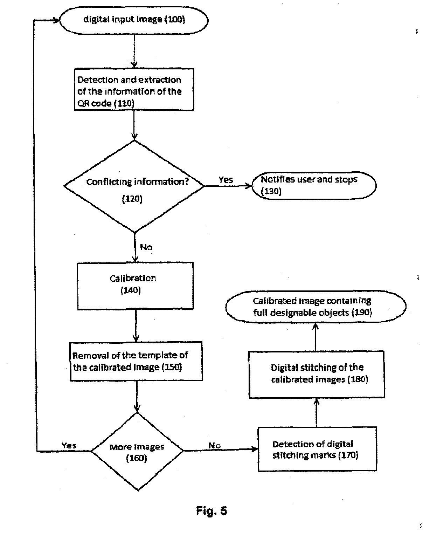

Figure 5 shows a flowchart of the method for digitizing objects that can be designed in multiple steps with automatic calibration.

### DETAILED DESCRIPTION OF THE INVENTION

The system for digitizing objects that can be designed in multiple steps with automatic calibration, subject matter of this invention, comprises a supporting base (10) on which designable objects (30) are arranged and superimposed by a flat transparent surface (20) fitted with a template (21) arranged at its periphery.

The supporting base (10) has a flat surface, preferably a glass one, in order to keep the designable objects (30) on the same plane of the calibration template (21). Additionally, its coloration contrasts with the designable objects (30) for better identification of said objects (30).

The flat transparent surface (20) is arranged on the supporting base (10), preferably an acrylic one as this material is light and less reflective than glass, with the template (21) arranged at the periphery of the face which is in contact with the designable objects (30) so that the template (21) and the designable objects (30) stay on the same plane.

The flat transparent surface (20) is heavy enough to exert pressure on the designable objects (30) arranged on said surface (20).

Optionally, a QR marker (22) is arranged on the flat transparent surface (20) so as not to hide the template (21).

The template (21) comprises visual marking repeated and aligned so as to configure a rectangular area arranged at the periphery of the flat transparent surface (20), said template involving the designable objects (30) and staying visible in the digital image. As the distortions of the image follow a radial error pattern, the rectangular template (21) at the periphery involving the designable objects increases the precision of the correction of lens and perspective distortions.

A common problem in digitization of systems with the template is to know a *priori* the exact dimensions of the template on both X and Y axes. Different processes of manufacturing of the flat transparent surface (20) with the template (21) may cause errors which interfere with the digitization, and as a result, with the calculation of the dimensions of the designable objects (30). Thus, the QR marker (22) can be used for storing real dimensions measured after the flat transparent surface (20) with the template (21) has been manufactured.

Another common problem in software and hardware appliances that accompany it is cloning. In order to ensure that only the flat transparent surface (20) with the template (21) is used with the original software copy, binary encoding of a client's serial number is used. It can be, for instance, a fingerprint (MD5, SHA-1, CRC32, etc.) of the software serial number, this additional information being stored in the QR marker (22).

The method for digitizing objects (30) that can be designed in multiple steps with automatic calibration comprises the following steps:
the designable object (30) is arranged on the supporting base (10) and is partially within the template (21), having visual marks (31) that show the place of digital stitching;
the flat transparent surface (20) is arranged on the supporting base (10) in order to exert pressure on the designable object (30) to keep its entire surface in contact with the supporting base (10);
a digital camera (40) captures an image so as to keep the entire template (21) visible (100);
the image is sent to a computer (50) where a computer program starts processing it;
optionally, the QR marker is detected and its information is extracted at the first stage of processing. If the information different from that expected by the computer program (120) is detected, the process is interrupted and the user (130) is notified,
the image is calibrated on the basis of the image (140) and, optionally, the additional information of the QR marker (22) in accordance with the process described in BRP10405039 and BRPI0802865;
the obtained image of the calibration process is cut out (150) in order to elimirate the template (21):
the previous steps (100), (110), (140), and (150), and optionally, the steps (120) and (130) are repeated as many times as necessary in order to obtain as many images as necessary for representing the designable objects (30) in their entirety;
the obtained images are processed by the computer program in order to obtain the position of the visual stitching marks (31) in each image (170), a cross-correlation algorithm being preferably used;
after identifying the visual marks (31) in each image, the stitching sequence and the stitching point (180) are determined in order to form a final image resulting from the composition of the previous ones (190).

The digital stitching (180) of the images can be done on the basis of a simple technique of cutting out and rotation or more modern techniques of composition and contrast and brightness adjustment such as those described in BROWN (M. Brown and D. Lowe. Automatic Panoramic Image Stitching using Invariant Features. International Journal of Computer Vision, 74(1), pg. 59-73, 2007).

The result of the digital stitching (190) is an image that contains the designable object (30) in its entirety and can be used in any outline digitization method.

## Claims

1. System for digitizing objects that can be designed in multiple steps with automatic calibration comprising a supporting base (10) on which the designable objects (30) are arranged and superimposed by a flat transparent surface (20) fitted with a template (21) arranged at its periphery, said template (21) comprising visual marking repeated and aligned so as to configure a rectangular area arranged at the periphery of the flat transparent surface (20) and involving the designable objects (100).

2. System for digitizing objects that can be designed in multiple steps with automatic calibration of claim 01 wherein, optionally, the flat transparent surface (20) has a QR marker (22) arranged so as not to hide the template (21).

3. System for digitizing objects that can be designed in multiple steps with automatic calibration of claim 02 wherein the QR marker (22) stores the real dimensions measured after the flat transparent surface (20) with the template (21) has been manufactured.

4. Method for digitizing objects that can be designed in multiple steps with automatic calibration using the system defined in claim 01 comprising the following steps:
the designable object (30) is arranged on the supporting base (10) and is partially within the template (21), having visual marks (31) that show the place of digital stitching;
the flat transparent surface (20) is arranged on the supporting base (10) in order to exert pressure on the designable object (30) to keep its entire surface in contact with the supporting base (10);
a digital camera (40) captures an image (100) in order to keep the entire template (21) visible;
the image is sent to a computer (50) where a computer program starts processing it;
the calibration (140) is carried out on the basis of the image;
the obtained image of the calibration process is cut out (150) in order to eliminate the template (21):
the previous steps are repeated as many times as necessary (160) in order to obtain as many images as necessary for representing the designable objects (30) in their entirety;
the obtained images are processed by the computer program in order to obtain the position of the visual stitching marks (31) in each image (170), a cross-correlation algorithm being preferably used;
after identifying the visual marks (31) in each image, the stitching sequence and the stitching point are determined in order to form a final image resulting from the composition of the previous ones;
the digital stitching (180) of the images is carried out;
an image that contains the designable object (30) in its entirety (190) is obtained.

5. Method for digitizing objects that can be designed in multiple steps with automatic calibration of claim 04 **characterized in that**, optionally, the first step comprises detection of the QR marker (22) and extraction of its information (110).
